# EUROPÄISCHE PATENTSCHRIFT

(11) **EP 3 150 340 B1**
(45) Veröffentlichungstag und Bekanntmachung des Hinweises auf die Patenterteilung: **21.03.2018**
(21) Anmeldenummer: 16191149.0
(22) Anmeldetag: 28.09.2016
(51) Int. Cl.: B25F 5/00

(54) **ELEKTROWERKZEUGMASCHINE MIT MEHREREN AKKUPACKS**
ELECTRIC MACHINE TOOL WITH MULTIPLE BATTERY PACKS
MACHINE-OUTIL ÉLECTRIQUE COMPRENANT PLUSIEURS BATTERIES

(30) Priorität: 29.09.2015 DE 102015116508
(43) Veröffentlichungstag der Anmeldung: 05.04.2017
(73) Patentinhaber: Metabowerke GmbH, 72622 Nürtingen (DE)
(72) Erfinder: Schumayer, Florian, 73235 Weilheim/Teck (DE); Matheis, Frank, 73265 Dettingen/Teck (DE)
(74) Vertreter: Markfort, Iris-Anne Lucie

(56) Entgegenhaltungen:
- WO-A1-2014/192362
- DE-A1-102010 016 175
- DE-U1-202011 104 115
- DE-U1-202011 110 568
- US-A1- 2014 129 164
- US-A1- 2014 265 604

## Beschreibung

Die Erfindung betrifft eine Elektrowerkzeugmaschine, umfassend wenigstens einen Verbraucher, insbesondere einen Elektromotor zum Antrieb eines antreibbaren Werkzeugs, sowie eine Anzahl von Schnittstellen, über die elektrisch und mechanisch wenigstens zwei Akkupacks zur Energieversorgung der Elektrowerkzeugmaschine mit dem wenigstens einen Verbraucher in Reihe geschaltet verbindbar sind, wobei für jedes der zu verbindenden Akkupacks wenigstens eine Signalschnittstelle zum Empfang wenigstens eines Signals des verbundenen Akkupacks vorgesehen ist, und wobei das erste verbundene Akkupack Signale innerhalb eines ersten Spannungsbereichs ausgibt und das zweite verbundene Akkupack Signale innerhalb eines zweiten Spannungsbereichs ausgibt.

Grundsätzlich ist die vorliegende Erfindung für jedes erdenkliche netzunabhängig betreibbare Elektrogerät einsetzbar und damit insbesondere für Elektrowerkzeugmaschinen mit mehreren Akkupacks und/oder Batteriepacks geeignet. Als Elektrowerkzeugmaschinen werden nachfolgend sowohl handgeführte Elektrowerkzeugmaschinen, wie Bohrmaschinen, Winkelschleier und dergleichen, als auch im Betrieb feststehende, d.h stationäre oder halbstationäre Geräte, wie Tischkreissägen oder dergleichen, verstanden.

Die elektrische und mechanische Zusammenschaltung einer Anzahl von Akkupacks zur Steigerung von Leistung und/oder Betriebsdauer der zugehörigen Elektrowerkzeugmaschine ist im Stand der Technik bereits hinlänglich bekannt.

So ist beispielsweise in der DE 38 44 093 A1 beschrieben, dass es bei einer Reihenschaltung von Akkupacks möglich ist, Elektrohandwerkzeuge mit einem größeren Leistungsbedarf zu versorgen. Es wird allerdings auch das Problem angegeben, dass bei einer solchen Verschaltung das Risiko einer unbemerkten Tiefentladung eines Akkupacks besteht und das betreffende Akkupack unbeabsichtigt zerstört werden kann. Um dieses Problem zu lösen, wird gemäß diesem Dokument ein Elektrohandwerkzeug mit netzunabhängiger Stromversorgung vorgestellt, bei dem zumindest zwei Akku-Packs über eine Schaltungsanordnung zur Überwachung ihres Ladezustandes mit dem Antriebsmotor elektrisch verbindbar sind, wobei die Akku-Packs in Reihe geschaltet und mit dem Antriebsmotor über einen Schutzschalter mit einem Steuerschaltkreis verbindbar sind, der bei Unterschreiten der unteren Grenzspannung eines der Akku-Packs die Öffnung des Schutzschalters bewirkt.

Werden Akkupacks mit einer integrierten Überwachungsanordnung verwendet, die insbesondere durch einen Microcontroller mit entsprechender Sensorik verwirklicht ist, so dass die Akkupacks in analoger und/oder digitaler Weise Daten über ihren Zustand (beispielsweise Ladezustand einzelner Akkuzellen und Temperaturstatus) ausgeben können, kann und sollte eine Auswertung der Akkupack-Zustände anderweitig und detaillierter erfolgen.

Hierzu wird in der Schrift DE 201022110568 U1 eine Elektrohandwerkzeugmaschine mit einer Mehrzahl von Akkuschnittstellen und einer Mehrzahl von Indikatoren offenbart, die jeweils zum Anzeigen von mindestens einem Zustand eines jeweiligen Akkupacks angepasst sind. In diesem Zusammenhang wird eine Hauptsteuerung eingesetzt, die in der Patentanmeldung US 2011/0198103 A1 offenbart und näher beschrieben ist. Die Hauptsteuerung ist mit dem Akkusteuerungs-Eingabe-/Ausgabeanschluss (auch "Autostopp-Anschluss" genannt) der Akkuschnittstelle elektrisch verbunden, und kann eine Signalspannung (beispielsweise ein Autostopp-Signal) von der Akkusteuerung als ein Eingangssignal empfangen. Die mit der Elektrohandwerkzeugmaschine verbundenen Akkupacks sind in Reihe geschaltet, so dass sich die Referenzspannungen (Massespannungen) der zwei Akkupacks voneinander unterscheiden. Demgemäß gibt der erste verbundene Akkupack Signale innerhalb eines ersten Spannungsbereichs aus und der zweite verbundene Akkupack gibt Signale innerhalb eines zweiten Spannungsbereichs aus. Als Ergebnis unterscheiden sich auch die Pegel der ausgegebenen Signalspannungen und können nicht direkt zwischen den Steuerungen ein- und ausgegeben werden, solange nicht zuerst eine Umwandlung der Signalspannungen durchgeführt wird.

Zur Lösung des Problems umfasst die aus dem Stand der Technik bekannte Elektrohandwerkzeugmaschine zwei entsprechende Spannungspegel-Verschieber, die zwischen der Hauptsteuerung und der Akkusteuerung des Hoch-Spannungs-Akkupacks vorgesehen sind, wobei die Hauptsteuerung auf dem Pegelniveau des Nieder-Spannungs-Akkupacks angeordnet ist.

Nachteilig bei dieser Lösung ist, dass nur eine einzige Hauptsteuerung verwendet wird, die mit allen beteiligten Akkupacks elektrisch verbunden ist. Bei einer herkömmlichen Ausführung der Hauptsteuerung als CPU können, trotz paralleler Anbindung der Akkuschnittstellen, die einzelnen Akkupacks nur sequentiell ausgewertet werden. Entsprechend der Taktfrequenz der CPU und der Anzahl der verwendeten Akkupacks kann eine solche Auswertung zeitkritische Sicherheitsmängel und somit eine Minderung der Akkupack-Lebensdauer mit sich bringen.

Eine Ausführung der Hauptsteuerung als ASIC oder als programmierbare digitale Schaltung zur parallelen Verarbeitung wäre hingegen sehr kostenintensiv und in Hinblick auf das Einsatzgebiet von Elektrowerkzeugmaschinen unwirtschaftlich.

Ebenfalls nachteilig ist, dass die Hauptsteuerung im Normalbetrieb dauerhaft elektrisch mit den Akkuschnittstellen verbunden ist. Im Falle eines plötzlich auftretenden schweren Defekts kann somit entweder das Elektrohandwerkzeuggerät durch einen Fehler eines oder mehrerer Akkupacks oder aber eines oder mehrere Akkupacks durch einen Fehler im Elektrohandwerkzeuggerät dauerhaft Schaden nehmen oder zumindest die jeweilige Bauteillebensdauer gemindert werden.

In Anbetracht des bekannten Stands der Technik besteht eine Aufgabe der vorliegenden Erfindung darin, eine wirtschaftlich günstige Schaltungsanordnung bereitzustellen, die die gegebenen Sicherheitsmängel erheblich mindert und dadurch die Lebensdauer der Akkupacks und der Elektrowerkzeugmaschine selbst nennenswert erhöht.

Demgemäß wird eine Elektrowerkzeugmaschine mit den Merkmalen des Anspruchs 1 vorgeschlagen. Diese umfasst eine Anzahl von Controllern, wobei jedem verbundenen Akkupack ein (separat ausgebildeter) Controller zugeordnet ist, der mit dem zugeordneten Akkupack verbunden ist, elektrisch von diesem versorgt wird und dazu eingerichtet ist, Signale des zugeordneten Akkupacks zu empfangen. Hierbei wird einer der Controller als Signalverarbeitungseinheit zur Auswertung und Weiterleitung der Signale der verbundenen Akkupacks an eine Steuerung der Elektrowerkzeugmaschine ausgebildet und mit jedem weiteren Controller zum Signalempfang verbunden. Weiterhin wird wenigstens ein Pegelwandler eingesetzt, der jeweils zwischen dem als Signalverarbeitungseinheit ausgebildeten Controller und einem weiteren Controller angeordnet ist, um den Spannungsbereich der Signale des wenigstens einen weiteren verbundenen Controllers an den Spannungsbereich der Signale des als Signalverarbeitungseinheit ausgebildeten anzugleichen.

Die Signalverarbeitungseinheit und deren Komponenten können selbstverständlich in jeder für den Fachmann angebracht erscheinenden Form, beispielsweise als Mikrocontroller, FPGA oder ASIC realisiert sein. Die Signalverarbeitungseinheit kann ebenso als eine Zusammenwirkung von unterschiedlich realisierten Einzelkomponenten mit einem Controller verstanden werden. Somit könnte beispielsweise ein Teil der Signalverarbeitungseinheit als Microcontroller und ein weiterer Teil als ASIC ausgebildet sein. Die Signalverarbeitungseinheit kann auch als Verbund mehrerer Controller verstanden werden.

Die Steuerung der Elektrowerkzeugmaschine kann dabei eine Steuerungs- und/oder Regelungs- und/oder Überwachungs- und/oder Kontrollaufgabe erfüllen. Somit kann unter anderem eine Notabschaltung der Elektrowerkzeugmaschine, Zustandsindikation der Akkupacks gegenüber dem Benutzer oder Leistungsregelung der Elektrowerkzeugmaschine von der Steuerung veranlasst werden.

Die genannte Anpassung der Spannungsbereiche der Signale der Controller und der Signalverarbeitungseinheit durch Pegelwandlung kann eine notwendige Maßnahme zur Sicherstellung von Funktionalität und Sicherheit in der Kommunikation der Einheiten untereinander darstellen. Der technische Hintergrund wird in einem folgenden Beispiel erläutert. Die Signalverarbeitungseinheit kann beispielsweise dem Akkupack zugeordnet sein, das sich in der Reihenschaltung auf dem niedrigsten Potential befindet (nachfolgend als erstes Akkupack bezeichnet). Die Kathode, beziehungsweise das dort vorliegende elektrische Spannungspotential, des ersten Akkupacks wird im Folgenden als GND1 und die Anode, beziehungsweise das dort vorliegende elektrische Spannungspotential, des ersten Akkupacks als VDD1 bezeichnet. Da die Signalverarbeitungseinheit von dem ersten Akkupack versorgt wird, müssen sich, keine weiteren Maßnahmen vorausgesetzt, alle Signale, die die Signalverarbeitungseinheit ausgibt, innerhalb des Spannungsbereichs GND1 bis VDD1 befinden. Eine digitale logische '1' kann dann zum Beispiel als ein Spannungspegel größer als 90% VDD1, und eine digitale logische '0' kann beispielsweise entsprechend als ein Spannungspegel kleiner 10% VDD1 definiert werden.

Ein weiterer Controller kann nun einem zweiten Akkupack zugeordnet sein, das sich in der Reihenschaltung auf dem nächst höheren Potential befindet. Dessen Kathode, GND2, würde dann im Wesentlichen auf dem gleichen Spannungspotential wie VDD1 befindlich sein, da beide Anschlüsse gemäß Reihenschaltung verbunden sind. Eine entsprechende Anode, VDD2, läge dann entsprechend um die Akkupackspannung des ersten Akkupacks höher. Da der weitere Controller von dem zweiten Akkupack versorgt wird, werden sich, keine weiteren Maßnahmen vorausgesetzt, alle Signale, die der Controller ausgibt, innerhalb des Spannungsbereichs GND2=VDD1 bis VDD2 befinden. Jeder digitale Wert ('0' = 10% VDD2 oder '1' = 90% VDD2), der von dem weiteren Controller in diesem Fall an die Signalverarbeitungseinheit übermittelt würde, läge somit über der Definition dessen logischer '1' = 90% VDD1. Dementsprechend kann die Signalverarbeitungseinheit keine Daten von dem Controller des zweiten Akkupacks einlesen und könnte durch die zu hoch befindliche Signalspannung sogar beschädigt werden. Analog könnte der Controller des zweiten Akkupacks auch keine Daten von der Signalverarbeitungseinheit einlesen, da jeder digitale Wert ('0' = 10% VDD1 oder '1' = 90% VDD1), der von der Signalverarbeitungseinheit an den Controller übermittelt würde, unter der Definition dessen logischer '0' = 10% VDD2 läge.

Während im Stand der Technik DE 201022110568 U1 nur ein einziger, von den Akkupacks separat ausgebildeter Controller eingesetzt wird, können durch die Verwendung eines Controllers pro angeschlossenem Akkupack nunmehr die Signale aller Akkupacks gleichzeitig, oder zumindest im Wesentlichen gleichzeitig, verarbeitet werden. Als Ergebnis kann eine Steuerung schneller auf potentiell kritische Akkupack-Zustände reagieren und beispielsweise eine Notabschaltung einleiten. Dadurch ist der Betrieb der Elektrowerkzeugmaschine mit mehreren Akkupacks grundsätzlich sicherer als bei der langsameren, sequentiellen Auswertung, wodurch sich die Lebensdauer der elektrischen Komponenten, insbesondere der Elektrowerkzeugmaschine erhöht.

Weiterhin kann vorgesehen sein, einen digitalen Kommunikationsbus, beispielsweise in serieller Ausführung, zur Verbindung und Signalübertragung zwischen der Signalverarbeitungseinheit und dem wenigstens einen weiteren Controller einzusetzen. Die Anbindung des wenigstens einen Controllers an den Kommunikationsbus soll hierbei über den Pegelwandler erfolgen, da aufgrund der Reihenschaltung der Akkupacks die Signalübertragung der Controller basierend auf unterschiedlichen Spannungsbereichen erfolgt. Werden mehr als zwei Akkupacks vorgesehen und entsprechend mehr als wenigstens ein Controller mit der Signalverarbeitungseinheit verbunden, ist jeder dieser Controller über einen Pegelwandler mit dem Kommunikationsbus verbunden.

Die Verwendung eines solchen Kommunikationsbusses ist von wirtschaftlichem Vorteil. Im Falle mehrerer Datenkanäle der Akkupack-Signalschnittstellen, wie im nachfolgenden Ausführungsbeispiel gezeigt, müsste gemäß dem Stand der Technik aus der DE 201022110568 U1, zumindest eine Pegelwandlung pro Datenkanal und pro Akkupack eingesetzt werden, um alle Akkupacks mit der Hauptsteuerung zu verbinden. Durch Verwendung eines schnellen, seriellen Datenbusses, insbesondere als 1-Kanal-Ausführung, muss nur noch eine einzige Pegelwandlung pro Akkupack bzw. pro zugeordnetem Controller erfolgen, um diesen mit dem gemeinsamen Bus und somit der Signalverarbeitungseinheit zu verbinden.

Es kann weiterhin vorgesehen sein, dass der bzw. die Pegelwandler eine galvanische Trennung, vorzugsweise in Form eines Optokopplers, Transformators oder kapazitiven Kopplers umfasst bzw. umfassen.

Durch die genannte Ausführungsform werden wirtschaftlich kritische oder technisch empfindliche Komponenten der Elektrowerkzeugmaschine und/oder der Adapter in schweren Fehlerfällen, beispielsweise vor Überspannungen, geschützt.

In einer Ausführung kann es vorgesehen sein, über den Pegelwandler den wenigstens einen weiteren Controller mit dem digitalen Kommunikationsbus derart zu verbinden, dass die jeweiligen Spannungsbereiche durch eine mathematische Differenzbildung angeglichen werden können. Dabei dient beispielsweise die Kathode bzw. Masseverbindung des ersten Akkupacks der Reihenschaltung, das sich auf dem niedrigsten Potential befindet, als Referenz. Die Differenzbildung kann dann erfolgen, indem eine vorliegende Spannungsdifferenz zwischen einer Kathode des dem jeweiligen Controller zugeordneten Akkupacks und einer Kathode des der Signalverarbeitungseinheit zugeordneten Akkupacks (Referenz) mathematisch vom Signal des wenigstens einen weiteren Controllers jeweils abgezogen wird. In einer möglichen Ausführung umfasst der Pegelwandler dabei eine Operationsverstärkerschaltung, wodurch die jeweiligen Spannungsbereiche durch die mathematische Differenzbildung angeglichen werden können.

Eine Pegelwandlung und mathematische Differenzbildung, insbesondere realisiert durch eine bewährte Operationsverstärkerschaltung, stellt sicher, dass die Kommunikation zwischen allen Controllern mit, im Idealfall, gleichen Spannungspegeln erfolgt und somit robust, schnell und kostengünstig zu bewerkstelligen ist.

Weiterhin können entsprechend der Ausführungsform der Akkupacks an diesen eine oder mehrere Signalschnittstellen vorliegen, um digitale Signale in serieller und/oder paralleler Form zu übermitteln. Demzufolge kann vorgesehen sein, dass der bzw. die Controller derart ausgebildet ist bzw. sind, digitale Signale in serieller und/oder paralleler Übertragung von dem jeweiligen Akkupack zu empfangen und die Signalverarbeitungseinheit ausgebildet ist, diese seriell und/oder parallel zur Steuerung zu übertragen.

Des Weiteren kann ein Akkupack derart ausgebildet sein, dass dieses neben digitalen Signalen (oder auch ausschließlich) analoge Signale ausgibt. In einer Ausführung der Elektrowerkzeugmaschine kann folglich die Signalverarbeitungseinheit und/oder der bzw. die weiteren Controller zumindest einen Analog-Digital-Wandler sowie Digital-Analog-Wandler umfasst bzw. umfassen, um analoge Signale von dem jeweiligen Akkupack eingangsseitig zu empfangen bzw. zur Steuerung zu übertragen.

Dies ist von Vorteil, da eine digitale Signalverarbeitung der ursprünglich analogen Signale besonders effizient erfolgen kann. Insbesondere bei dem vorliegenden System, das Pegelwandlungen und potentiell unsicher definierte Spannungspegel beinhaltet, ist außerdem eine deutlich robustere Signalverarbeitung der digitalen Signale zu erwarten.

Dementsprechend kann zudem vorgesehen sein, dass die Controller und die Signalverarbeitungseinheit dazu eingerichtet sind, untereinander in digitaler Form Signale zu übertragen.

Eine solche digitale Kommunikation kann durch im Stand der Technik wohl bekannte Bussysteme schnell und robust stattfinden. Dabei sind der zumindest eine Controller und die Signalverarbeitungseinheit mit einem gemeinsamen Übertragungsweg verbunden. Beispielsweise durch eindeutige Adressierungen der Controller und der Signalverarbeitungseinheit können alle Kommunikationsteilnehmer somit Daten gezielt austauschen. Zur Reduzierung notwendiger Datenkanäle können aus dem Stand der Technik gängige Verfahren, wie serielle Übertragungsprotokolle, synchrone Taktung der Kommunikationsteilnehmer, Taktsynchronisierung, bis hin zu einer 1-Kanal-Ausführung des Bussystems angewendet werden.

Es steht dem Fachmann selbstverständlich frei, die vorstehend genannten Ausführungsformen in die Elektrowerkzeugmaschine selbst oder aber in einer Adapteranordnung zu integrieren, die mit Schnittstellen zur elektronischen und mechanischen Kopplung mit den Akkupacks und mit der Elektrowerkzeugmaschine ausgebildet ist. Bei der zweiten Ausgestaltungsvariante kann anstelle eines Akkupacks die Adapteranordnung mit einem oder insbesondere mehreren daran aufgenommenen Akkupacks mit einer Elektrowerkzeugmaschine gekoppelt werden. Dies ist vorteilhaft, da hierdurch auch bestehende Elektrowerkzeugmaschinen ohne integriertes Akkumanagement mit mehreren Akkupacks bestückt werden und hierdurch mit einer gesteigerten Leistung oder Betriebsdauer betrieben werden können.

Weiterhin kann vorgesehen sein, dass die Elektrowerkzeugmaschine und/oder die Adapteranordnung zumindest einen Indikator aufweist, um einem Benutzer zumindest ein Datum und/oder einen Fehlerzustand zumindest eines der Akkupacks anzuzeigen. Ein solcher Indikator kann dabei durch zusätzliche Maßnahmen in der Adapteranordnung und/oder der Elektrowerkzeugmaschine, beispielsweise in Form analoger und/oder digitaler Bauteile, angesteuert werden. Es wäre aber insbesondere auch denkbar, dass die Signalverarbeitungseinheit und/oder sonstige Controller in der Adapteranordnung und/oder der Elektrowerkzeugmaschine zu diesem Zweck ausgebildet und eingesetzt werden.

Eine solche Indikation kann den Bedienkomfort der Elektrowerkzeugmaschine insbesondere bei Verwendung einer Adapteranordnung deutlich erhöhen. Durch die Informationsweitergabe an den Benutzer ist dieser in der Lage den Einsatz der Elektrowerkzeugmaschine vorausschauender zu planen und diese effizienter einzusetzen, beispielsweise mit Hilfe einer Restkapazitätsanzeige.

So hat sich bei aus dem Stand der Technik bekannten Lösungen gezeigt, dass eine gegebenenfalls vorhandene Indikation eines Akkupacks über dessen Zustand, z.B. in Form einer LED-Anzeige, bei einer Vielzahl der bekannten Adapterlösungen und Elektrowerkzeugmaschinen von Gehäuseteilen verdeckt wird. Demzufolge kann der Kunde die Indikatoren nicht direkt einsehen und auf kritische Zustände der Akkupacks nicht vorzeitig reagieren. Zudem muss der Kunde in einem Fehlerfall alle angeschlossenen Akkupacks vom Gerät abziehen und einzeln kontrollieren, was sich in der Praxis als unkomfortabel herausgestellt hat.

Durch das Vorsehen von wenigstens einem Indikator wird dieser bekannte Nachteil eliminiert und eine komfortablere und sichere Handhabung gewährleistet.

Einige mögliche Ausgestaltungen für eine Indikation an den Benutzer sind nachfolgend genannt, die Liste ist allerdings nicht als abgeschlossen zu verstehen. Alle Informationen, die der Betriebssicherheit und/oder Erhöhung der Lebensdauer von vorhandenen Komponenten, wie der Elektrowerkzeugmaschine, der Adapteranordnung oder der Akkupacks, sowie dem Bedienkomfort dienen, können angebracht sein. Es wäre weiterhin beispielsweise denkbar, eine einfache Fehleranzeige für einen oder mehrere Akkupacks vorzusehen, wobei jeweils einzelne Fehlerursachen und/oder eine Kombination bzw. Zusammenfassung von Fehlerursachen zur Anzeige gebracht werden können. Dies bedeutet, dass beispielsweise der Indikator aktiv anzeigt, dass ein Fehler vorliegt. Ebenso wäre es denkbar, eine Indikation insbesondere dann vorzunehmen, wenn ein kritischer Schwellwert durchbrochen wurde. Dies bedeutet, dass nicht erst im Falle eines Fehlers, sondern bereits bei Durchbrechen eines entsprechenden Schwellwerts eine Indikation dem Anwender erlaubt, präventiv zu handeln. In diesem Fall kann zudem entweder der Schwellwert und/oder der kritische Wert des auslösenden Akkupacks und/oder die entsprechenden Werte gleichen Datentyps aller Akkupacks angezeigt werden. Selbstverständlich ist es ebenso denkbar, mehrere verschiedene Datentypen anzuzeigen, wobei insbesondere für jeden Datentyp der kritischste Wert aller verbundenen Akkupacks angezeigt werden kann, gegebenenfalls mit der zusätzlichen Information, welches Akkupack den jeweiligen Werten zuzuordnen ist.

Weiter kann die Signalverarbeitungseinheit und/oder der zumindest eine Controller derart ausgebildet sein, die unterschiedlichen Fehlerzustände durch unterschiedliche Blink-Codes über den zumindest einen Indikator dem Benutzer anzuzeigen.

Die Verwendung von Blink-Codes für verschiedene Fehlerzustände stellt einen konstruktiven und wirtschaftlichen Vorteil dar. Sollen beispielsweise Fehlerzustände in binärer Form über eine LED angezeigt werden, kann bei Verwendung von Blink-Codes eine einzige LED zur Indikation verschiedener Fehlerzustände verwendet werden. Es muss folglich nicht eine LED für jeden einzelnen Fehlerzustand an der Elektrowerkzeugmaschine bzw. der Adapteranordnung ausgebildet sein.

Schließlich wäre es denkbar, einen Indikator jeweils einem Akkupack zuzuordnen und diesen in Form einer LED-Anordnung auszubilden. Weiterhin könnten für jedes Akkupack auch mehrere Indikatoren vorgesehen sein, die jeweils unterschiedlichen Datenwerten zugeordnet sind.

In der Praxis wäre es insbesondere denkbar, dass ein Akkupack sich einer Tiefentladung gefährlich annähert oder zu überhitzen droht, während sich das oder die weiteren Akkupacks im Verbund in einem sicheren Zustand befinden. Durch die erfindungsgemäße Lösung würde von der Intelligenz der Elektrowerkzeugmaschine bzw. der Signalverarbeitungseinheit bzw. dem zumindest einen Controller der Fehlerfall erkannt, wobei gegebenenfalls eine Abschaltung der Elektrowerkzeugmaschine vornehmen werden kann. Dennoch wüsste der Benutzer in diesem Fall nicht zwingend, welches Akkupack für den Fehler verantwortlich ist.

Eine Indikation für jedes Akkupack kann den Komfort für den Benutzer somit deutlich erhöhen, da in dieser Ausführung alle angeschlossenen Akkupackzustände gleichzeitig eingesehen und direkt zugeordnet werden. Hierzu bietet es sich insbesondere an, die Indikatoren in offensichtlicher Nähe zu den jeweils zugeordneten Akkupacks anzubringen. Der Benutzer ist somit in der Lage in einem Fehlerfall ein kritisches Akkupack schnell zu identifizieren und auszutauschen, ohne jedes Akkupack einzeln kontrollieren zu müssen. Eine Ausbildung der Indikatoren als LED-Anordnungen kann weiter eine technisch einfache, robuste und günstige Lösung darstellen.

Die Figuren zeigen ein bevorzugtes Ausführungsbeispiel, in dem einzelne Merkmale der vorliegenden Erfindung in Kombination miteinander dargestellt sind. Diese sind jedoch auch losgelöst voneinander zu betrachten und können dementsprechend von einem Fachmann ohne Weiteres zu weiteren sinnvollen Unterkombinationen verbunden werden.

Es zeigen schematisch:
- Figur 1a: eine Seitenansicht einer erfindungsgemäßen Elektrowerkzeugmaschine in der Ausführung einer Elektrohandbohrmaschine mit netzunabhängiger Stromversorgung;
- Figur 1b: eine Stirnansicht der Maschine nach Figur 1a mit teilgeschnittenen Gehäuse;
- Figur 2: eine alternative Ausführungsform der Erfindung mit einer Adapteranordnung und einer beispielhaften LED-Anordnung;
- Figur 3: eine schematische Darstellung einer in die erfindungsgemäße Elektrowerkzeugmaschine nach den Figuren 1a,b oder in eine erfindungsgemäße Adapteranordnung nach Figur 2 integrierte Schaltungsanordnung für die Reihenschaltung von zwei Akkupacks.

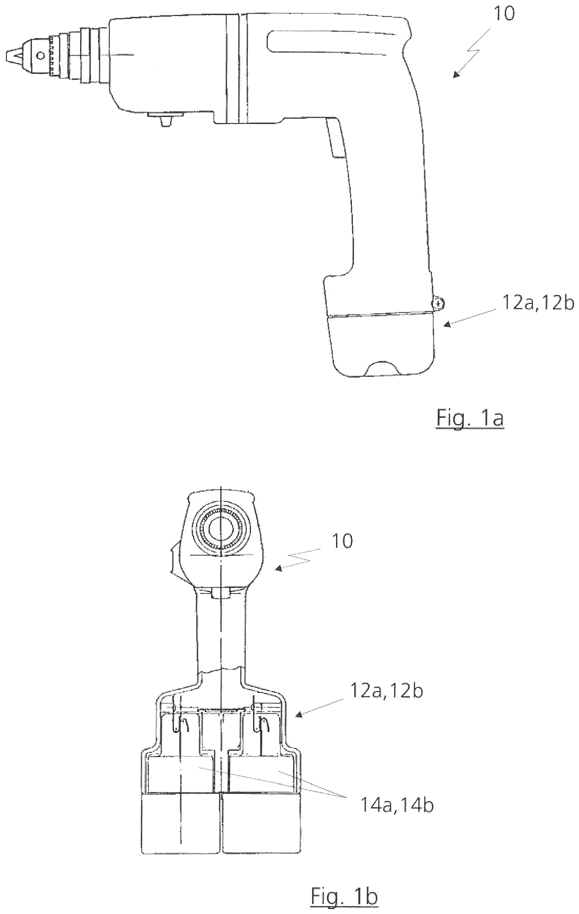

Die Figuren 1 a und 1b zeigen beispielhaft eine als Elektrohandbohrmaschine ausgeführte Elektrowerkzeugmaschine 10 mit Schnittstellen 12a zur mechanischen und elektrischen Verbindung einer Anzahl von Akkupacks. In dem gezeigten Beispiel sind zwei Akkupacks 14a, 14b in Reihe geschaltet. Selbstverständlich ist die Erfindung jedoch auch auf Anordnungen anwendbar, bei denen mehrere Akkupacks in Reihe geschaltet sind, beispielsweise drei, vier, fünf oder sechs.

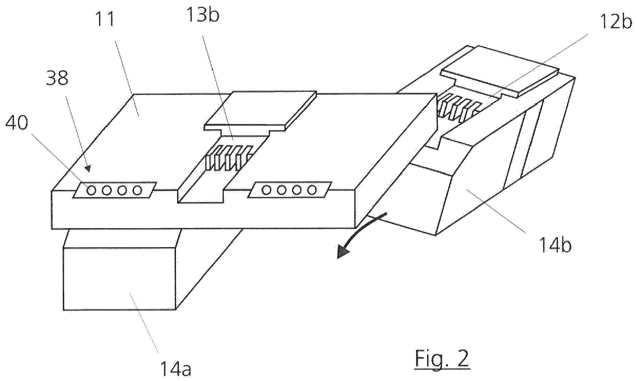

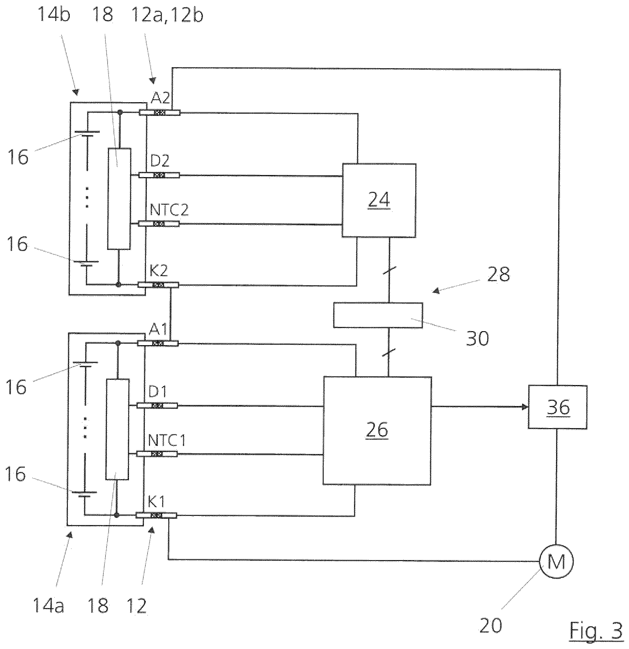

Zur Bereitstellung eines Akkumanagements der angeschlossenen Akkupacks 14a und 14b ist eine Schaltungsanordnung vorgesehen, die beispielhaft in Figur 3 gezeigt ist. Diese kann in der Elektrowerkzeugmaschine 10 gemäß Figur 1 umgesetzt sein oder alternativ in der Adapteranordnung 11 gemäß Figur 2.

Die Adapteranordnung 11 gemäß Figur 2 kann dabei in der gezeigten Ausführungsform an ihren eingangsseitigen Schnittstellen 13a beispielsweise zwei Akkupacks 14a, 14b aufnehmen. Die Schnittstellen 13a entsprechen in ihrer Ausgestaltung den Schnittstellen 12a der Elektrowerkzeugmaschine 10 gemäß Figur 1. Weiterhin weist die Adapteranordnung ausgangsseitig eine Schnittstelle 13b zur mechanischen und elektrischen Kopplung mit einer Elektrowerkzeugmaschine auf. Die ausgangsseitige Schnittstelle 13b ist dabei so ausgelegt, dass sie mit einer korrespondierenden Schnittstelle 12a an der Elektrowerkzeugmaschine 10 zusammenpasst, so dass die Elektrowerkzeugmaschine 10 die Adapteranordnung 11 anstelle eines einzelnen Akkupacks 14a, 14b aufnehmen kann. Die Schnittstelle 13b der Adapteranordnung 11 ist folglich den Schnittstellen 12b der Akkupacks 14a, 14b nachempfunden und ermöglicht sowohl eine mechanische als auch elektrische Verbindung der Adapteranordnung 11 mit der Elektrowerkzeugmaschine 10.

Die Figur 2 zeigt weiterhin eine mögliche Ausgestaltung von Indikatoren 38. Jedem Akkupack 14a, 14b wird dabei ein separater Indikator 38 zugeordnet und zur Verdeutlichung der Zuordnung direkt oberhalb des jeweiligen Akkupacks 14a, 14b angeordnet. Die Indikatoren 38 sind in der dargestellten Ausführung als LED-Anordnung 40 realisiert. Beispielsweise kann somit eine LED als Fehlerzustandsanzeige über Blink-Codes verwendet werden und drei weitere LEDs können in diskreter Weise Datenwerte wie Restkapazität anzeigen. Selbstverständlich können die Indikatoren in gleicher Weise auch an der Elektrowerkzeugmaschine selbst vorgesehen sein.

Zur Lösung der bekannten Probleme des Akkumanagements insbesondere bei der Kopplung mehrerer Akkupacks ist eine spezifische Schaltungsanordnung vorgesehen, auf die nachfolgend unter Bezugnahme auf die Figur 3 näher eingegangen wird. Diese ist gemäß Figur 3 in die Werkzeugmaschine integriert, weshalb bei der nachfolgenden Beschreibung auf eingangsseitige Schnittstellen 12a, Bezug genommen wird. Soll diese Schaltungsanordnung jedoch in einer Adapteranordnung 11 integriert werden, bilden die Schnittstellen 13a, 13b der Adapteranordnung die Schnittstellen 12a, 12b der Akkupacks 14a, 14b bzw. der Elektrowerkzeugmaschine 10, wie vorstehend beschrieben, nach.

Ein einzelnes Akkupack 14a, 14b besteht dabei aus mehreren Akkuzellen 16 in Reihenschaltung und einer Überwachungsanordnung 18 in Form eines Mikrocontrollers, wobei Zustände wie zum Beispiel Restkapazität und Temperatur ausgewertet und über eine digitale Schnittstelle D1, D2 sowie eine analoge Schnittstelle NTC1, NTC2 ausgegeben werden können.

Die Schnittstellen 12a verschalten die Akkupacks 14a, 14b in Reihe, wodurch sich zwischen der Anode A2 des in der Reihenschaltung nachgeschalteten zweiten Akkupacks 14b und der Kathode K1 des in der Reihenschaltung vorgeschalteten ersten Akkupacks 14a eine insgesamt höhere Gesamtspannung einstellt, als zwischen Anode der A2 und der Kathode K2 sowie der Anode A1 und der Kathode K1. Ein Verbraucher 20 kann folglich mit höherer Spannung bzw. Leistung beaufschlagt werden, als es nur mit einem einzelnen Akkupack 14a, 14b möglich wäre.

Zur Überwachung und Auswertung der Signale über die Signalschnittstellen D1, D2, NTC1, NTC2 der Akkupacks 14a, 14b wird für jedes Akkupack 14a, 14b ein Controller eingesetzt, der separat von dem zugehörigen Akkupack 14a, 14b ausgebildet und als Teil der Elektrowerkzeugmaschine 10 vorgesehen ist. Einer der Controller wird dabei als Signalverarbeitungseinheit 26 eingesetzt, der mit wenigstens einem weiteren Controller 24 kommunizieren kann. Dabei ist der als Signalverarbeitungseinheit eingesetzte und ausgebildete Controller 26 mit den Signalschnittstellen D1, NTC1 des ersten Akkupacks 14a des niedrigeren elektrischen Potentials in der Reihenschaltung, und der Controller 24 mit den Signalschnittstellen D2, NTC2 des zweiten Akkupacks 14b des höheren elektrischen Potentials in der Reihenschaltung, verbunden. Eine elektrische Versorgung der Controllers 24 und 26 erfolgt jeweils direkt über die zugeordneten Akkupacks 14a, 14b. Zur stabilen elektrischen Versorgung kann selbstverständlich beispielsweise auch ein Gleichspannungswandler oder Ähnliches eingesetzt werden.

Der Controller 24 und die Signalverarbeitungseinheit 26 sind in der dargestellten Ausführungsform über einen digitalen Kommunikationsbus 28 verbunden. Dadurch, dass sich das zweite Akkupack 14b auf einem höheren Bezugspotential befindet als das erste Akkupack 14a, ist eine direkte, fehlerfreie Signalübertragung zwischen Controller 24 und Signalverarbeitungseinheit 26 allerdings nicht möglich. Somit wird zusätzlich ein Pegelwandler 30 eingesetzt, der die Signalübertragung über den digitalen Kommunikationsbus 28 ermöglicht, indem der Spannungsbereich der Signale des Controllers 24 an den Spannungsbereich der Signale der Signalverarbeitungseinheit 26 angeglichen wird.

Beispielsweise kann die erwähnte Pegelwandlung durch mathematische Differenzbildung erfolgen. Dabei dient die Kathode K1 bzw. Masseverbindung des ersten Akkupacks 14a der Reihenschaltung, das sich auf dem niedrigsten Potential befindet als Referenz. Das erste Akkupack 14a ist mit der Signalverarbeitungseinheit 26 verbunden und versorgt diese auch elektrisch. Soll nun ein Controller 24, der einem zweiten Akkupack 14b zugeordnet ist, das sich auf elektrisch höherem Potential in der Reihenschaltung befindet, mit der Signalverarbeitungseinheit 26 oder dem gemeinsamen Bus 28 verbunden werden, wird die Spannungsdifferenz zwischen der Kathode K2 des zweiten Akkupacks 14b und der Referenzkathode K1 bestimmt und von den Signalen des Controllers 24 abgezogen. Der Pegelwandler 30 kann hierzu beispielsweise als Operationsverstärker realisiert sein.

Die Signalverarbeitungseinheit 26 kann dann, basierend auf den Daten beider Akkupacks 14a, 14b, verschiedene Steuerungsaufgaben erfüllen oder diese in einer dafür in der Elektrowerkzeugmaschine 10 vorgesehenen Steuerungs- bzw. Regelungsanordnung 36 veranlassen. So kann beispielsweise eine Versorgungsunterbrechung ausgelöst werden. Weiterhin wäre auch eine Leistungsregelung des Verbrauchers 20 denkbar.

## Patentansprüche

1. Elektrowerkzeugmaschine (10) umfassend:
- wenigstens einen Verbraucher (20), insbesondere einen Elektromotor zum Antrieb eines antreibbaren Werkzeugs,
- eine Anzahl von Schnittstellen (12), über die elektrisch und mechanisch wenigstens zwei Akkupacks (14a, 14b) zur Energieversorgung der Elektrowerkzeugmaschine (10) mit dem wenigstens einen Verbraucher (20) in Reihe geschaltet verbindbar sind, wobei für jedes der zu verbindenden Akkupacks (14a, 14b) wenigstens eine Signalschnittstelle (D1, D2, NTC1, NTC2) zum Empfang wenigstens eines Signals des verbundenen Akkupacks (14a, 14b) vorgesehen ist, und wobei das erste Akkupack (14a) Signale innerhalb eines ersten Spannungsbereichs ausgibt und das zweite Akkupack (14b) Signale innerhalb eines zweiten Spannungsbereichs ausgibt,
- eine Anzahl von Controllern (24, 26), wobei jedem verbundenen Akkupack (14a, 14b) ein Controller (24, 26) zugeordnet ist, der mit dem zugeordneten Akkupack (14a, 14b) verbunden ist, elektrisch von diesem versorgt wird und dazu eingerichtet ist, Signale des zugeordneten Akkupacks (14a, 14b) zu empfangen, und wobei einer der Controller (26) als Signalverarbeitungseinheit zur Auswertung und Weiterleitung der Signale der verbundenen Akkupacks an eine Steuerung (36) der Elektrowerkzeugmaschine (10) ausgebildes ist,
**gekennzeichnet dadurch, dass** einer der Controller (26) hierzu mit jedem weiteren Controller (24) zum Signalempfang verbunden ist, sowie dass die Elektrowerkzeugmaschine wenigstens einen Pegelwandler (30) umfasst, der jeweils zwischen dem als Signalverarbeitungseinheit ausgebildeten Controller (26) und einem weiteren Controller (24) angeordnet ist, um den Spannungsbereich der Signale des wenigstens einen weiteren verbundenen Controllers (24) an den Spannungsbereich der Signale des als Signalverarbeitungseinheit ausgebildeten Controllers (26) anzugleichen.

2. Elektrowerkzeugmaschine (10) nach Anspruch 1, wobei ein digitaler Kommunikationsbus (28), insbesondere in serieller Ausführung, zur Verbindung und Signalübertragung zwischen dem als Signalverarbeitungseinheit ausgebildeten Controller (26) und dem wenigstens einen weiteren Controller (24) vorgesehen ist.

3. Elektrowerkzeugmaschine (10) nach einem der vorhergegangenen Ansprüche, wobei der Pegelwandler (30) eine galvanische Trennung, vorzugsweise in Form eines Optokopplers umfasst.

4. Elektrowerkzeugmaschine (10) nach Anspruch 2, wobei der Pegelwandler (30) jeweils den wenigstens einen weiteren Controller (24) mit dem digitalen Kommunikationsbus (28) verbindet, derart, dass die jeweiligen Spannungsbereiche durch eine mathematische Differenzbildung angeglichen werden können, indem eine vorliegende Spannungsdifferenz zwischen einer Kathode (K2) des dem jeweiligen Controller (24) zugeordneten Akkupacks (14b) und einer Kathode (K1) des der Signalverarbeitungseinheit (26) zugeordneten Akkupacks (14a) mathematisch vom Signal des wenigstens einen weiteren Controllers (24) jeweils abgezogen wird.

5. Elektrowerkzeugmaschine (10) nach Anspruch 4, wobei der Pegelwandler (30) eine Operationsverstärkerschaltung umfasst, wodurch die jeweiligen Spannungsbereiche durch die mathematische Differenzbildung angeglichen werden können.

6. Elektrowerkezugmaschine (10) nach Anspruch einem der vorhergegangenen Ansprüche, wobei der Pegelwandler (30) ein Widerstandsnetzwerk umfasst, wodurch die jeweiligen Spannungsbereiche durch zumindest eine Spannungsteilung angeglichen werden können.

7. Elektrowerkzeugmaschine (10) nach Anspruch 3, wobei die galvanische Trennung (22) einen Optokoppler umfasst.

8. Elektrowerkzeugmaschine (10) nach einem der vorhergegangenen Ansprüche, wobei die Controller (24, 26) derart ausgebildet sind, digitale Signale in serieller und/oder paralleler Übertragung von dem jeweiligen Akkupack (14a, 14b) zu empfangen und der als Signalverarbeitungseinheit ausgebildete Controller (26) dazu ausgebildet ist, diese seriell und/oder parallel zur Steuerung (36) zu übertragen.

9. Elektrowerkzeugmaschine (10) nach einem der vorhergegangenen Ansprüche, wobei der als Signalverarbeitungseinheit ausgebildete Controller (26) und/oder die Controller (24) zumindest einen Analog-Digital-Wandler sowie Digital-Analog-Wandler umfassen, um analoge Signale von dem jeweiligen Akkupack (14a, 14b) eingangsseitig zu empfangen bzw. zur Steuerung (36) zu übertragen.

10. Elektrowerkzeugmaschine (10) nach einem der vorhergegangenen Ansprüche, wobei der wenigstens eine weitere Controller (24) und der als Signalverarbeitungseinheit ausgebildete Controller (26) derart eingerichtet sind, untereinander in digitaler Form Signale zu übertragen.

11. Adapteranordnung (11) zur Verwendung mit einer Elektrowerkzeugmaschine (10), die wenigstens einen Verbraucher (20) umfasst, aufweisend:
- wenigstens eine Schnittstelle (13b) zur mechanischen und elektrischen Kopplung der Adapteranordnung (11) mit der Elektrowerkzeugmaschine (10),
- eine Anzahl von Schnittstellen (13a), über die elektrisch und mechanisch wenigstens zwei Akkupacks (14a, 14b) zur Energieversorgung der Elektrowerkzeugmaschine (10) über die Adapteranordnung (11) mit dem wenigstens einen Verbraucher (20) in Reihe geschaltet verbindbar sind, wobei für jedes der zu verbindenden Akkupacks (14a, 14b) wenigstens eine Signalschnittstelle (D1, D2, NTC1, NTC2) zum Empfang wenigstens eines Signals des verbundenen Akkupacks (14a, 14b) vorgesehen ist, und wobei das erste Akkupack (14a) Signale innerhalb eines ersten Spannungsbereichs ausgibt und das zweite Akkupack (14b) Signale innerhalb eines zweiten Spannungsbereichs ausgibt,
- eine Anzahl von Controllern (24, 26), wobei jedem verbundenen Akkupack (14a, 14b) ein Controller (24, 26) zugeordnet ist, der mit dem zugeordneten Akkupack (14a, 14b) verbunden ist, elektrisch von diesem versorgt wird und dazu eingerichtet ist, Signale des zugeordneten Akkupacks (14a, 14b) zu empfangen, und wobei einer der Controller als Signalverarbeitungseinheit (26) zur Auswertung und Weiterleitung der Signale der verbundenen Akkupacks an eine Steuerung (36) der Elektrowerkzeugmaschine (10) ausgebildet ist,
**gekennzeichnet dadurch, dass** einer der Controller (26) mit jedem weiteren Controller (24) zum Signalempfang verbunden ist, sowie dass die Elektrowerkzeugmaschine wenigstens einen Pegelwandler (30) umfasst, der jeweils zwischen dem als Signalverarbeitungseinheit ausgebildeten Controller (26) und einem weiteren Controller (24) angeordnet ist, um den Spannungsbereich der Signale des wenigstens einen weiteren verbundenen Controllers (24) an den Spannungsbereich der Signale des als Signalverarbeitungseinheit ausgebildeten Controllers (26) anzugleichen.

## Claims

1. Electric power tool (10) comprising:
- at least one load (20), in particular an electric motor for driving a driveable tool,
- a number of interfaces (12) via which at least two rechargeable battery packs (14a, 14b) for supplying power to the electric power tool (10) can be electrically and mechanically connected in series to the at least one load (20), wherein at least one signal interface (D1, D2, NTC1, NTC2) for receiving at least one signal of the connected rechargeable battery pack (14a, 14b) is provided for each of the rechargeable battery packs (14a, 14b) to be connected, and wherein the first rechargeable battery pack (14a) outputs signals within a first signal range, and the second rechargeable battery pack (14b) outputs signals within a second signal range,
- a number of controllers (24, 26), wherein one controller (24, 26) is associated with each connected rechargeable battery pack (14a, 14b), is connected to the associated rechargeable battery pack (14a, 14b), is supplied with electrical power by the said rechargeable battery pack and is designed to receive signals of the associated rechargeable battery pack (14a, 14b), and wherein one of the controllers (26) is designed as a signal processing unit for evaluating and forwarding the signals of the connected rechargeable battery pack to a control system (36) of the electric power tool (10),
**characterized in that** one of the controllers (26) is connected to each further controller (24) for receiving signals for this purpose, and
**in that** the electric power tool comprises at least one level converter (30) which is in each case arranged between the controller (26) that is designed as a signal processing unit and a further controller (24) in order to match the voltage range of the signals of the at least one further connected controller (24) to the voltage range of the signals of the controller (26) that is designed as a signal processing unit.

2. Electric power tool (10) according to Claim 1, wherein a digital communication bus (28), in particular of series design, for connection and signal transmission is provided between the controller (26) that is designed as a signal processing unit and the at least one further controller (24).

3. Electric power tool (10) according to either of the preceding claims, wherein the level converter (30) comprises a DC isolation, preferably in the form of an optocoupler.

4. Electric power tool (10) according to Claim 2, wherein the level converter (30) in each case connects the at least one further controller (24) to the digital communication bus (28) in such a way that the respective voltage ranges can be matched by calculating a mathematical difference by way of an existing voltage difference between a cathode (K2) of the rechargeable battery pack (14b) that is associated with the respective controller (24) and a cathode (K1) of the rechargeable battery pack (14a) that is associated with the signal processing unit (26) being mathematically subtracted from the signal of the at least one further controller (24) in each case.

5. Electric power tool (10) according to Claim 4, wherein the level converter (30) comprises an operational amplifier circuit, as a result of which the respective voltage ranges can be matched by calculating a mathematical difference.

6. Electric power tool (10) according to claim one of the preceding claims, wherein the level converter (30) comprises a resistor network, as a result of which the respective voltage ranges can be matched by at least one voltage division operation.

7. Electric power tool (10) according to Claim 3, wherein the DC isolation (22) comprises an optocoupler.

8. Electric power tool (10) according to one of the preceding claims, wherein the controllers (24, 26) are designed in such a way as to receive digital signals in serial and/or parallel transmission from the respective rechargeable battery pack (14a, 14b) and the controller (26) that is designed as a signal processing unit is designed to transmit the said digital signals in series and/or in parallel to the control system (36).

9. Electric power tool (10) according to one of the preceding claims, wherein the controller (26) that is designed as a signal processing unit and/or the controller (24) comprise/comprises at least one analogue/digital converter and digital/analogue converter in order to receive analogue signals from the respective rechargeable battery pack (14a, 14b) at the input end and, respectively, to transmit the said analogue signals to the controller (36).

10. Electric power tool (10) according to one of the preceding claims, wherein the at least one further controller (24) and the controller (26) that is designed as a signal processing unit are designed in such a way as to transmit signals between one another in digital form.

11. Adapter arrangement (11) for use with an electric power tool (10) which comprises at least one load (20), having
- at least one interface (13b) for mechanically and electrically coupling the adapter arrangement (11) to the electric power tool (10),
- a number of interfaces (13a) via which at least two rechargeable battery packs (14a, 14b) for supplying power to the electric power tool (10) can be electrically and mechanically connected in series to the at least one load (20) by means of the adapter arrangement (11), wherein at least one signal interface (D1, D2, NTC1, NTC2) for receiving at least one signal of the connected rechargeable battery pack (14a, 14b) is provided for each of the rechargeable battery packs (14a, 14b) to be connected, and wherein the first rechargeable battery pack (14a) outputs signals within a first voltage range, and the second rechargeable battery pack (14b) outputs signals within a second voltage range,
- a number of controllers (24, 26), wherein one controller (24, 26) is associated with each connected rechargeable battery pack (14a, 14b), is connected to the associated rechargeable battery pack (14a, 14b), is supplied with electrical power by the said rechargeable battery pack and is designed to receive signals of the associated rechargeable battery pack (14a, 14b), and wherein one of the controllers is designed as a signal processing unit (26) for evaluating and forwarding the signals of the connected rechargeable battery pack to a control system (36) of the electric power tool (10),
**characterized in that** one of the controllers (26) is connected to each further controller (24) for receiving signals, and
**in that** the electric power tool comprises at least one level converter (30) which is in each case arranged between the controller (26) that is designed as a signal processing unit and a further controller (24) in order to match the voltage range of the signals of the at least one further connected controller (24) to the voltage range of the signals of the controller (26) that is designed as a signal processing unit.

## Revendications

1. Machine-outil électroportative (10), comprenant :
- au moins un utilisateur (20), en particulier un moteur électrique pour commander un outil à entraîner,
- une série de positions de coupe (12) à travers lesquelles au moins deux groupes de batteries (14a, 14b) peuvent être couplés pour assurer la connexion électrique et mécanique de la machine-outil électroportative (10) avec ledit au moins un utilisateur (20), connecté en ligne, dans lequel pour chacun des groupes de batteries (14a, 14b) est prévue une position de coupure de signal (D1, D2, NTC1, NTC2) pour la réception d'au moins un signal du groupe de batteries connecté (14a, 14b), et dans lequel le premier groupe de batteries (14a) délivre des signaux dans un premier secteur de tensions et le second groupe de batteries (14b) délivre des signaux dans un second secteur de tensions,
- une pluralité de contrôleurs (24, 26), dans lequel à chacun desdits groupes de batteries (14a, 14b) est attribué un contrôleur (24, 26), qui est connecté au groupe de batteries correspondant (14a, 14b), alimenté électriquement par lui et installé en conséquence pour capter des signaux qui sont destinés au groupe de batteries appropriées (14a, 14b) et pour utiliser l'un des contrôleurs (26) comme une unité de traitement du signal pour la valorisation et le renvoi des signaux des groupes de batteries (14a, 14b) sur une commande (36) de la machine-outil électroportative (10), ainsi conçue,
- **caractérisée en ce que** l'un des contrôleurs (26) et couplé avec chacun des autres contrôleurs (24) pour le captage des signaux, de même que la machine-outil électroportative comporte un convertisseur de niveau (30) qui est disposé entre le contrôleur (26) qui est conçu comme une unité de traitement de signal et un autre contrôleur (24), pour adapter le niveau de tension des signaux dudit au moins un des autres contrôleurs liés (24) au niveau de tension du contrôleur (26) constituant l'unité de traitement du signal.

2. Machine-outil électroportative (10), selon la revendication 1,
dans laquelle un bus de commutation numérique (28), de préférence sous une forme de réalisation sérielle, est disposé entre le contrôleur (26) constituant l'unité de traitement de signal et un autre contrôleur (24) pour la connexion et la transmission du signal.

3. Machine-outil électroportative (10), selon l'une des revendications précédentes, dans laquelle le convertisseur de niveau (30) comporte une séparation galvanique sous la forme d'un optocoupleur.

4. Machine-outil électroportative (10), selon la revendication 2 dans laquelle le convertisseur de niveau (30), relie chacun au moins un autre contrôleur (24) au bus de commutation numérique (28), de telle manière que les domaines de tensions respectifs puissent être ajustés par la formation d'une différence mathématique, de telle manière qu'une différence de tension déterminée entre une cathode (K2) du groupe de batteries (14b) correspondant au contrôleur (24) et une cathode (K1) du groupe de batteries (14a) correspondant à l'unité de traitement du signal (26) puisse être retirée mathématiquement, respectivement du signal d'au moins un des contrôleurs supplémentaires (24).

5. Machine-outil électroportative (10), selon la revendication 4, dans laquelle le convertisseur de niveau (30), comporte une prise de renfort opérationnelle par laquelle les domaines de tension correspondants peuvent être ajustés par une détermination d'une différence mathématique.

6. Machine-outil électroportative (10), selon l'une des revendications précédentes, dans laquelle le convertisseur de niveau (30), comporte un réseau de résistances, par lequel les domaines de résistances peuvent être ajustés par au moins une division de tensions.

7. Machine-outil électroportative (10), selon la revendication 3, dans laquelle la séparation galvanique (22) comporte un optocoupleur.

8. Machine-outil électroportative (10), selon l'une des revendications précédentes, dans laquelle les contrôleurs (24, 26) sont conçus de manière que à capter les signaux numériques, en transmission sérielle et/ou parallèle par les groupes de batteries correspondantes (14a, 14b) et le contrôleur (26) conçu comme une unité de traitement du signal est agencé pour les transmette en série et/ou parallèles à la commande (36).

9. Machine-outil électroportative (10), selon l'une des revendications précédentes, dans laquelle le contrôleur (26) conçu comme une unité de traitement du signal et/ou les contrôleurs (24) comportent au moins un convertisseur analogique-numérique ainsi qu'un convertisseur numérique-analogique pour capter les signaux numériques à l'entrée du groupe de batteries (14a, 14b) correspondantes, respectivement pour les transmettre à la commande (36).

10. Machine-outil électroportative (10), selon l'une des revendications précédentes, dans laquelle ledit au moins un autre contrôleur (24) et ledit contrôleur conçu comme une unité de traitement de signal (26) sont agencés de telle manière qu'ils se transmettent entre eux des signaux sous forme numérique.

11. Dispositif adaptateur (11) agencé pour être utilisé avec une machine-outil électroportative (10), qui comporte au moins un utilisateur (20), comportant :
- au moins une position de coupe (13b) pour assurer le couplage mécanique et électrique du dispositif adaptateur (11) avec la machine-outil électroportative (10),
- une pluralité de positions de coupe (13a), par lesquelles le raccordement en ligne peut être effectué par au moins deux groupes de batteries (14a, 14b) pour assurer l'alimentation électrique et mécanique de la machine-outil électroportative (10) par le dispositif adaptateur (11) avec ledit au moins un utilisateur (20), dans lequel, pour chacun des groupes de batteries à relier (14a, 14b) au moins une position de coupure de signal (D1, D2, NTC1, NTC2) est prévue pour la réception d'au moins un signal du groupe de batteries connecté (14a, 14b), et dans lequel le premier groupe de batteries (14a) délivre des signaux dans un premier secteur de tensions et le second groupe de batteries (14b) délivre des signaux dans un second secteur de tensions,
- une pluralité de contrôleurs (24, 26), dans lequel à chacun desdits groupes de batteries (14a, 14b) est attribué un contrôleur (24, 26), qui est connecté au groupe de batteries correspondant (14a, 14b), alimenté électriquement par lui et installé en conséquence pour capter des signaux qui sont destinés au groupe de batteries appropriées (14a, 14b) et pour utiliser l'un des contrôleurs (26) comme une unité de traitement du signal pour la valorisation et le renvoi des signaux des groupes de batteries sur une commande (36) de la machine-outil électroportative (10),
**caractérisé en ce que** l'un des contrôleurs (26) et couplé avec chacun des autres contrôleurs (24) pour le captage des signaux, de même que la machine-outil électroportative (10) comporte un convertisseur de niveau (30) qui est disposé entre le contrôleur (26) qui est conçu comme une unité de traitement de signal et un autre contrôleur (24), pour adapter le niveau de tension des signaux dudit au moins un des autres contrôleurs liés (24) au niveau de tension du contrôleur (26) constituant l'unité de traitement du signal.
